# EUROPEAN PATENT SPECIFICATION

(11) **EP 2 699 812 B1**
(45) Date of publication and mention of the grant of the patent: **07.11.2018**
(21) Application number: 12723081.1
(22) Date of filing: 18.04.2012
(51) Int. Cl.: F16B 13/14

(54) **ANCHOR FOR THERMALLY INSULATING BUILDING SYSTEMS AND METHOD OF ITS ANCHORING IN THERMALLY INSULATING BUILDING SYSTEMS**
VERANKERUNG FÜR WÄRMEISOLIERENDE GEBÄUDESYSTEME UND ENTSPRECHENDES VERANKERUNGSVERFAHREN IN WÄRMEISOLIERTEN GEBÄUDEYSTEMEN
ANCRAGE POUR SYSTÈMES D'ISOLATION THERMIQUE DE BÂTIMENTS ET PROCÉDÉ D'ANCRAGE DANS DES SYSTÈMES D'ISOLATION THERMIQUE DE BÂTIMENTS

(30) Priority: 18.04.2011 CZ 20110224
(43) Date of publication of application: 26.02.2014
(73) Proprietor: ECORAW.RDP s.r.o., 756 61 ROZNOV pod Radhostem (CZ)
(72) Inventor: MÍCEK, Ivan, 036 01 Martin (SK)
(74) Representative: Smrckova, Marie
(86) International application number: PCT/CZ2012/000034
(87) International publication number: WO 2012/142982

(56) References cited:
- DE-C- 962 483
- DE-U1- 9 206 045
- US-A- 3 901 039

## Description

### Technical Field

The invention concerns an anchor for thermally insulating building systems, which is made of primarily surface flat metal material or, as the case may be, another material with corresponding strength properties, with eyes or holes or perforations all over its surface, filled with filling mass. The anchor is in fact of tubular shape, extended in the direction of its longitudinal axis with a given length and a given cross-section vertical in section to the longitudinal axis of the anchor. The metal material for the spiral is metal mesh or netting, stainless or with anti-corrosion treatment, or a thin board with holes, straight-through perforations or notches or, as the case may be, another material with corresponding strength properties for the spiral, e.g. plastic material in the form of a thin board with holes or eyes or mesh or netting. This planar, primarily flat metal or, as the case may be, another material with corresponding strength with eyes, holes, is wound-up around longitudinal axis of the anchor with at least one complete coil, with the beginning of the coil of the space spiral parallel to the longitudinal axis, and with the end of the coil or the last coil situated primarily on the external jacket, or creating partially or completely the external jacket of the anchor from this material.

The invention also concerns a method of anchoring of this anchor in thermally insulating building systems.

### Background of the Invention

Till now the connection or anchoring of the building materials is realized with the use of dowels, plastic spacers and metal elements. The dowels are usually used only in solid base materials. Metal spacers are used for demanding connections and are usually screwed in or other mechanical connecting elements are used. The dowels or plastic spacers with head only hold in solid base materials and, in a majority of cases, require other mechanical or reinforcement elements or glues. The current types of dowels and spacers can be released from the fixed material and violate planeness of walls by their gradual releasing.

The current status of the ways of anchoring of primarily building elements uses the following principles:
- Mechanical anchoring with metal and plastic dowels. It is not suitable for soft and low-cohesion materials. It requires high rigidity of the connected parts so that the mechanical strutting of the anchoring elements could take place in materials like concrete, full brickwork, wood etc.
- Chemical anchors into perforated and partially hollow building structures of rigid consistence, e.g. hollow bricks, porous concrete, thermal blocks etc. The principle consists in pouring the anchoring element over with a two-compound gluing material, which is secured against dripping off with a plastic or metal perforated tube during the hardening period.

US 1,516,652 priority 9.4.1923 US, of the applicant TOMKINS Charles called "Expansion sheet", describes a tubular element formed of woven material, which has filler in its gaps. The description specifies fabric or wire; the filler can be paint or white lead. The expansion sheet, tubular roll from a woven material, is inserted into a pre-drilled hole and replaces a PE dowel introduced later on. The expansion sheet requires an anchoring element, especially of a screw type, and also immediate contact with the base material. The expansion sheet shall be in mutual immediate contact with the pre-drilled hole. The roll increases the friction surfaces in the hole towards the screw or common screw, and its diameter shall be always bigger than the inner hole of the roll. While screwing into the roll, the coils of the screw are pressed into the fabric and, therewith, they create a female thread. After screwing in, in addition to the created coil, the roll is also strutted in the hole and friction is increased between the screw, the roll and the hole respectively. Therefore, it concerns exclusively a mechanical effect and mechanical fixation, when the roll creates a deformation layer to secure the screw and increases and balances the friction area in the hole. The roll shall be made of the material enabling deformation. If required, it balances the walls of the hole or, in case of a change in the diameter of the screw, the roll can be rolled from more layers.

The function of this type of the expansion sheet is always purely mechanical; later on it was replaced with plastic dowels successfully. This roll by itself is not a structural element and it may not be interrupted with the coil of the screw transversely; otherwise it would limit its holding force in the axial direction. The expansion sheet is made of tight-rolled roll, with layers in contact, and due to friction between them it does not adapt to the hole, so that it cannot be inserted into a smaller hole and it does not perform its function in a bigger hole. The roll in the shape of a tubular element is strictly bound to the tubular circular hole with respect to the function with the screw, which shall be also of a circular cross-section. During its use, this tubular element is deformed by the impact of the screw and if there is no deformation, it does not perform its function. The expansion sheet shall be inserted into the anchoring hole along its whole length. Furthermore, this solution shall respect the direction of rolling of the roll and the direction of lead of the coil. If this is not respected, by inserting a roll into the hole with incorrect orientation of rolling and in combination with incorrect lead, such connection might not perform its function. The filler from paint or white lead in gaps of the mesh apparently servers only for partial reinforcement of the created connection of the woven material. The description specifies that this filler has a tendency to hold the eyes of the cover so that the cover could be located easily in the hole in the wall and it also forms the cushioning material, and the filler fills the spaces between coils of the screw and also uneven places and hollows in the wall of the hole. Therefore, this connection cannot be created if the pre-drilled hole is not of a thoroughly circular cross-section. This solution is, in case of anchoring e.g. insulating systems, absolutely unsuitable due to the creation of thermal bridges and inability to fix the insulating composite in the required position vis-à-vis the building structure.

US 4,968,185, (analogue EP 338 982 B1), priority 18. 4. 1988 DE, of the owner HILTI AG US, called "Metal mesh sleeve for dowel assembly", describes a dowel for the connection, especially in light-weight and hollow building parts. The mesh sleeve is used for receiving the hardening material and anchoring element. The sleeve is provided with protrusions as a retaining agent. The tubular sleeve is closed with a fold at its leading end. At the trailing end, it is provided with a flange in the function of the hammering agent. The sleeve consists of a rolled stripe of expanded metal, the longitudinal edges of which are mutually connected along their length. Longitudinal edges can be mutually connected by gluing, soldering or welding. As expanded metal can be formed easily, longitudinal edges can be mutually locked up by hooking. Hooking of longitudinal edges can follow after rolling of the stripes in the operation process. The used expanded metal has eyes from 0.6 mm to 3 mm. Anchoring is realized by means of hardening masses with glued connection of the hardening mass with the walls of the borehole and shaped piece from the hardening mass formed in the cavity of the base material, especially in bigger cavities it is necessary to avoid uncontrolled outflow of the yet unhardened mass.

It concerns a chemical anchor, like many others present in the market; it only differs with its shape. Its objective is to keep the filling mass for a certain period, which flows through the holes in it, and sometimes also slightly expands. At the same time, it is necessary to insert an anchoring steel element into this "packing". If the anchoring element is not used and the anchor is slid into the anchoring hole totally, i.e. it would not meet its purpose. As filling mass, one- or two-component slowly hardening, slowly expanding, but in the final result very strong filling mass is used. The strength of the hardened mass conditions the function of the connection with the inserted anchoring element, on which the principle of these anchors is based. Longitudinal seam, which is on the jacket of this chemical anchor, is a question of the connection of two ends of thin rolled material and it is only a technological seam for closing the anchor in the shape of a "screen-like sleeve", so that the filling mass does not flow out of it. The steel anchoring element creates thermal bridge. This structure is totally slid into the anchoring hole. The slow-hardening filler could not be used in the vertical position for the ceiling; it would flow out and, therefore, the anchor has a closed bottom.

EP 2 208 896 A1, priority 16. 1. 2009 DE, of the owner FISCHWERKE GmbH & Co., DE called "Tubular anchor" describes the anchor for chemical anchoring or for connecting a non-illustrated anchoring rod, e.g. coiled rod, in the borehole by means of hardening mass. The hardening mass is, e.g. one-component or multi- component glue or artificial resin or a different mortar. The anchoring cavity is a one-part tubular section made of a plastic material, the peripheral wall of which is perforated or, as the case may be, netted, whereby the output holes are formed for the hardening mass. In the peripheral direction, the anchoring sleeve is not closed completely but it features a slot going in the longitudinal direction so that the anchoring sleeve can be compressed or expanded flexibly. The slot is bridged over with a foil bridge, whereby it is always closed, and even if there is a gap between the edges of the slot. In the bridge over the slot, there is a fold so that it has variable length to adapt to a different diameter of the anchoring cavity, which conditions a different width of the slot. Bridging-over of the slot features, like the peripheral wall of the anchoring cavity, perforation to create the output holes for the hardening mass.

It concerns another type of a chemical anchor, which is modified, however, as a flexible one with an inserted segment, which enables it to adapt, to a small extent, to a smaller hole so that the glue filled into the anchor through the gap in the jacket, which is enabled by flexibility of the anchor, does not flow out. Flexibility of the anchor enables to insert it into the pre-drilled hole with pre-stress, which can be advantageous in the holes, which are slightly smaller than the outer diameter of the anchor. It is an alternative to chemical anchors with an inserted segment.

These chemical anchors are used with glue and with an expansion material, which, after hardening, shall transfer the forces impacting the metal or another anchoring element, which is inserted after the application of the glue into the anchor. Its removal from the hole, necessary with respect to the strength of the glue considering the transfer of forces, shall be difficult to realize and often with a partial destruction of the anchoring hole and the building structure. Strength of the hardened glue is often bigger than strength of the material the building structure.

US 3,901,039 A, priority 9.3.1979 SE, of the applicant LUNDKVIST Ingevald Alfred SE, called "Apertured sleeve-shaped members for use in carrying out roof-bolting by means of bolts fastened in bore holes". The sleeve member - sleeve - can have length of several meters and it consists of relatively rigid but flexible material with holes. The material can be metal, e.g. sheet steel, which has the thickness between 0.3-0.7 mm, e.g. 0.5 mm was tested successfully. The thickness also depends on length of the member. The sleeve has a longitudinal slot along its length and changes its diameter by the impact of pressure. Mortar can be poured into the inner cavity of the sleeve through the longitudinal slot. This slot should have such width to enable dosing the cement mortar in the usual way. The width of the slot corresponding to approximately one quarter of the circumference of the sleeve is most suitable. Thanks to compressibility, it is possible to adapt the diameter of the sleeve to the diameter of the bore; therefore the same type of the sleeve can be used for bores of different sizes. The sleeve can be filled with mortar and can be used without being compressed in advance if the application into the bore of a corresponding diameter is considered. In the performed tests, it was detected that after being filled with mortar and its diameter being fixed, the sleeve holds the mortar both in the horizontal and vertical position even with the slot being open. The slot can be compressed so that the edges of the slot touch or, at the end, as it is illustrated, one edge overlaps the other one.

It concerns a metal roll, which is shaped permanently. Only the rims hold it into the required shape, which are inserted after the compression of the roll to hold it in the required position. This connection is only meaningful in case the anchoring element is inserted into the hole of the created anchor, which creates a thermal bridge in our case. The deformed metal sheet only performs its function when it is totally inserted into the anchoring hole. All these known ways require pre-drilled holes and, therefore, they can be used in a majority of cases for their particular purpose only. No way enables a totally universal application, e.g. for loess and inconsistent base materials, which do not enable the creation of an adhesion layer.

The spacers are designed into materials with smaller cohesion, e.g. soft insulations. The cohesion is created by the metal roll, through which the foamed plastic material expands and fills the whole space and uneven places, which are mutually connected by the shape of the roll. With its strength, it is sufficient for anchoring of the insulating composite and flexible fixation of the connected surfaces.

CZ 290 305 B6, priority 13. 09. 1996 CZ, of the owner ECORAW, s.r.o., SK, called "The spacer" describes the spacer for building purposes, which consists of at least one tubular element, made in the shape of the roll, with eyes or perforations, filled with filling mass inside and outside of the tubular element. It is advantageous to have foamed plastic material as the filling mass. Tubular elements of various diameters can be stored one in another. The tubular element can be made of the metal mesh or perforated plastic material. The tubular element can have an installation element inside on one or both ends. If required, a reinforcement element can be inserted into the tubular element.

The advantage of this spacer is that it enables, in a relatively simple way of anchoring, fixation and connection of all building materials. The spacer anchors along the whole periphery of the hole, passing between the connected materials, and then this anchoring is more efficient than the anchoring known till now by means of spacers with heads. These spacers, when applied for suspension of items of medium weight by means of an inserted element, require that the PE dowels in the spacer shall be filled with foam so that it enables screwing of the screws. This spacer has a relatively small ability to increase its strength properties in a simple and non-complicated way, specifically by winding a bigger number of rolls into the roll. The layers of the rolls in contact limit the ability of the foam to expand in the direction of the walls of the anchoring hole. It decreases the size of the anchoring strength. This anchor is able to transfer the load safely only up to a certain limit.

The disadvantage of this solution is that tight winding of layers of the roll, which are in contact along the whole length of the roll, can close the expanding foam inside the roll and the foam does not reach the anchoring hole through the roll. It results in decreasing the anchoring strengths of the connection. The expanding foam, the penetration of which in the direction from the longitudinal axis of the roll through the individual layers of the roll to the wall of the anchoring hole is limited, could push the anchor with a stronger pressure on the rear side of the anchoring hole from the said hole in the direction out of the hole. With respect to this spacer with tight winding of the roll, a small overlap is enough and the expansion in this place of the circumference of the anchor is considerably lower.

In case of application of the spacer for a multi-layer connection, e.g. connection in the insulating composite or between the insulation and the wall etc., which features big weight, the strength properties of this spacer can be insufficient. Big weight of the anchored composite, e.g. with the air gap between the insulation and the structure, helps the spacer not only with clean shear but also with a combined stress bending - shear - or, as the case may be, tensile force. The necessity to increase the strength parameters of these spacers is based on increasing the thickness of the insulating composite and also additional anchoring of the insulating composite on already insulated objects. The length of the spacer in this case, which is loaded with the said combination of the strength load, is increased by approximately 100 % of the length of the spacer, which exceeds the hole in the building structure. Furthermore, it represents an enormous increase of weight of the anchored insulating composite. It requires increasing the strength properties of the spacer, which cannot be ensured by increasing the diameter of the spacer, because it causes a huge time and financial loss during the installation. Increasing the strength properties cannot be realized even by increasing the number of layers of the roll of the spacer being in contact, because it decreases the penetration ability for the filling mass - foam. Another possibility of increasing strength properties is the application of the reinforcement metal element in the longitudinal axis of the anchor, which is a common and very often used way. However, each such reinforcement metal element is an undesired thermal bridge.

An improvement of this spacer is brought by CZ PV 2010-300, priority 16. 4. 2010 CZ, of the applicant ECORAW s.r.o., SK, called "The spacer"; it describes the spacer with spatially arranged layers of the spiral, where the start of the coil of the spiral is provided with a comb (11) in the opposite direction than the coil goes further on. The filling mass inside and outside the coils (4) and also between them is a foamed plastic, advantageously foamed polyurethane foam and/or at least one material from the group including plaster, cement, sand, lime, glue, binding agent and suitable minerals, or, as the case may be, liquid, powder and plastic mortar mixtures, with a suitable additive, i.e. with a foaming agent contributing to increasing the volume and decreasing weight of such mineral materials. The filling mass advantageously creates gluing targets outside of the spiral. On the outer end, the spiral can be developed into the armouring part. In the vertical cross-section, the spiral can have circular, oval, triangular or multi-angle shaped coils.

This spacer has very good mechanical properties, e.g. strength, which are achieved by multiple coiling of the applicable material, when the expansion ability of the filling mass remains, in fact, unlimited between individual layers of the spiral. Increasing strength can be applied by means of the reinforcement element, which is the inner comb at the beginning of the coil of the spiral. However, this reinforcement element as the actual part of the spiral of the spacer causes a problem in practice during the application of the foamed plastic by the application tools, e.g. plastic hoses. When woven steel netting is used for the production of this spacer, as the most frequently used material, problems commonly occur while inserting the hose up to the bottom of the anchoring hole while inserting the application hoses into the anchoring hole through the hole in the spacer. The face of the hose catches sharp edges of the reinforcement comb in the spacer consisting of many sharp ends of steel wires used during the production of the steel netting. Therefore, during gradual inserting and removal of the application hose, it can be cut by the sharp edges of the reinforcement comb. In case of other materials used for the spiral of the spacer, this phenomenon does not occur and then this spacer can be applied in many ways, especially in cases when it concerns a spacer with a bigger diameter, over 20 mm. These dimensions are usually less searched for and used for the application of anchoring of the thermally insulating systems.

### Summary of the Invention

The said disadvantages are eliminated or considerably limited for the anchor for thermally insulating building systems pursuant to this invention. The anchor is made of primarily surface, flat material, which is metal or, as the case may be, another material with corresponding strength, with eyes, holes or perforations all over its surface, enabling permanent deformation, coiled up to at least one spatially arranged spiral with at least one overlapping coil. Coils are arranged in terms of space in the direction vertical to the longitudinal axis without contact of individual layers of coils, featuring the ability to be penetrated by the filling mass between its spatially arranged coils and eyes, holes or perforations of this material. The coils are spatially arranged in the spiral, vertical to longitudinal axis of the anchor. The nature of this invention consists in the fact that the beginning and the end of the coil of the spatially coiled spiral are without any part or surface, which would be deflected in any other direction from the continuous lead of the spiral, when this anchor with the filling mass is created as a self-supporting structural element without other inserted reinforcement items.

In the optimum layout, the anchor has the biggest outer diameter of the coil of the spiral 30 mm and the smallest inner diameter 4 mm, and where the distance between individual coils of the spatially coiled spiral equals to the average size of the eye or perforations of the material in case of the outer diameter of the spirals up to 20 mm, and equals 1.5- to 2-fold of the average size of the eye or perforation of the material, or, as the case may be, diameter of the hole in the perforated semi-product in case of the outer diameter of the spirals over 20 mm.

The main advantage of this invention is that the anchor, made as a self-supporting structural element, does not require any another inserted reinforcement compact items, e.g. a screw or a pin, which cause the creation of undesired thermal bridges and considerably increase the price of the anchor, its weight and also increase the time and price of the installation. When the beginning and the end of the coil have no part or area, the tangent of which would be directed from the connected continuation of the coil towards the longitudinal axis of the spiral or from it, the anchor has no part complicating the production or the installation, e.g. in the form of a comb, rounding or chamfering of the end edge, which is suitable for manual production. The anchor pursuant to this invention can be manufactured easily in the continuous way, which is highly efficient in case of the mass production and it is not based on the classic winding-up. In case of multiple spatial coiling of the spiral of the anchor with coils separated from one another in a nearly equidistant way, the anchor has very good ability to be penetrated by the filling mass between the coils through the holes or perforations of the material, and inside and outside of the spiral in the direction to the anchoring hole, which finally results in the creation of a reliable anchoring connection, with the required strength, with given parameters of distances of individual layers of coils of the spiral and its diameters, which were identified on the basis of long-term tests and verifications. The price of this anchor on the rolling mill can be up to 4x cheaper than the classic winding of the material with a comb on the inner beginning of the spiral.

The anchor for thermally insulating building systems has a bigger biggest diameter of the coil of the spiral 30 mm and the smallest inner diameter 4 mm. This specific range was tested with long-term tests and appears to be also the most suitable dimension for thermally insulating systems connecting the building structure with the building insulation.

By long-term experiments in semi-operation and operation conditions it was found out that the optimum distance between individual coils of spatially coiled spiral equals, in case of the outer diameter of the spirals up to 20 mm, average size of the eye or perforation, or, as the case may be, diameter of the hole in the perforated semi-product. Or that the optimum distance between individual coils of the spatially coiled spiral, in case of the outer diameter of the spirals over 20 mm, equals 1.5- to 2-fold of the average size of the eye or perforation or, as the case may be, diameter of the hole in the perforated semi-product. If, in case of the outer size of the spiral up to 20 mm, distances of individual layers of coils of the spiral of the anchor are not complied with by the size of the eye or perforation, then there is a danger that the filling mass does not expand sufficiently through individual layers of the anchor to the anchoring hole. If, in case of the outer size of the spiral over 20 mm, the distances between individual layers of the claimed size of the eye or perforation are not complied with, then it can result in insufficient penetration of the expansion filling mass into the anchoring hole through the coils of the spiral of the anchor.

It is advantageous when the primarily flat surface metal material or, as the case may be, another material with corresponding strength, coiled into the spiral in the vertical section to the longitudinal axis, has the middle part of this material coiled across the inner cross-section of the spiral, diagonally, so that this inner part of the coil creates the inner transverse reinforcement, as well as the internal integral connected part of the coil. The transverse inner reinforcement represents another improvement of properties of the spiral in the sense of securing the inner strength of the spiral, whereby of the whole anchor, too. It is also advantageous when inner transverse reinforcement passes through the longitudinal axis of the spiral. The inner reinforcement can but need not necessarily pass through the longitudinal axis of the spiral and is always made so that it is possible to pull a tool between this inner reinforcement and the near coil, e.g. an application hose, to foam the filling mass. It is also advantageous when the inner transverse reinforcement features, in traverse section, vertical to the longitudinal axis, the shape of letter "S" with round transitions to the following coils of the spiral. This type of the reinforcement has the advantage that there is no burred edge of the reinforcement within the inner space of the anchor as it is the case in the current state of the art pursuant to PV 2010-300. The advantage of this reinforcement is firstly increased strength of the anchor and simple inserting of the application hose up to the bottom of the anchoring hole. It is also advantageous when the inner transverse reinforcement features in the transverse section, the shape of letter "S" with sharp transition into the coil of the spiral. This type of the reinforcement is easier in terms of production than the previous rounded reinforcement and it also provides the possibility of simple inserting of the application hose.

This invention also deals with the way of anchoring of the anchor pursuant to this invention. The nature of the way of anchoring of this anchor in thermally insulating building systems pursuant to this invention consists in the fact that the spiral and the filling mass penetrating outside and inside through this spiral, between its coils and through its eyes, holes or perforation of the material, creates a self-supporting structural element, which fills the anchoring hole in thermally insulating building systems. It is advantageous when the depth of inserting of the anchor into the anchoring hole in the building structure corresponds to the 2- to 10-fold of the diameter of the anchor, not more than 150 mm, pursuant to the conditions and the thickness of the building structure. If the required inserting of the anchor into the building structure is complied with, the anchoring in the building structure is safe in this way. If this depth of inserting of the anchor into the building structure is not complied with, the anchoring strength is decreased. At the same time, it is advantageous when the depth of inserting of the anchor into the anchoring hole in the building insulation shall be at least to the depth of 2/3 of the building insulation, however not less than 50 mm. If the required inserting of the anchor into the building insulation is complied with, the anchoring in the building insulation is safe in this way. If this depth of inserting of the anchor into the building insulation is not complied with, then in certain cases the required hold-down forces are not achieved.

### Overview of Figures in Drawings

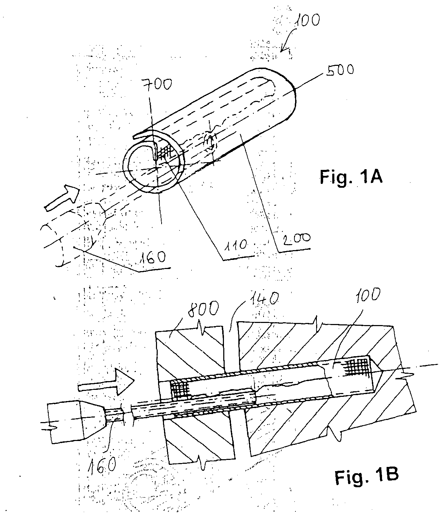

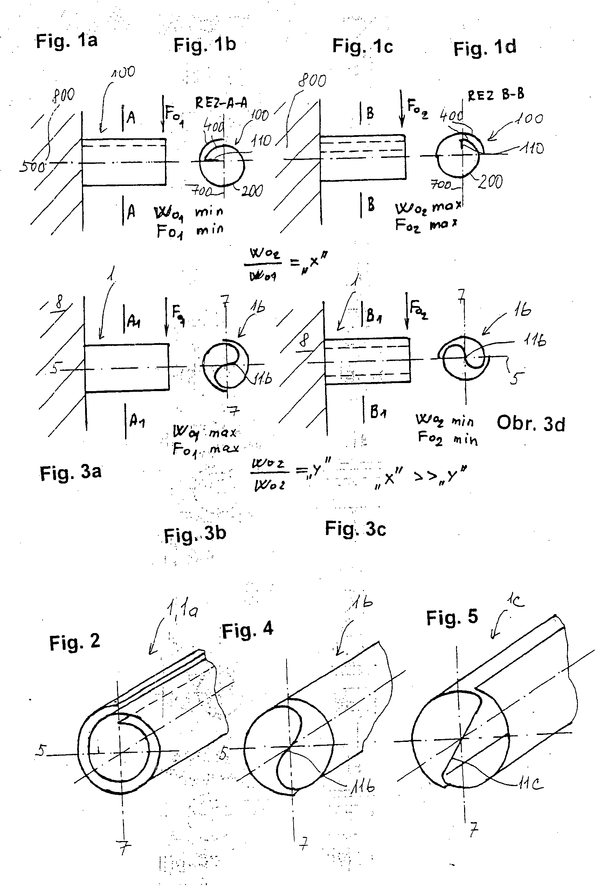

Fig. 1A, 1B, 1a, 1b, 1c, 1d illustrate the nearest state of the art pursuant to the application of the invention CZ PV 2010-300 called The spacer.
Fig. 1A illustrates in perspective view the application of foamed filling mass into the spacer pursuant to the following designs of the spacer pursuant to Fig. 1a, 1b, 1c, 1d,
Fig. 1B longitudinal vertical section through the application, with the anchor inserted in the building structure.
Fig. 1a illustrates the lateral view of the spiral of the spacer, fixed into the building structure, and
Fig. 1b section A-A from Fig. 1a, where the inner end of the coil of the spiral, terminated with a comb, is situated in the horizontal plane of the vertical section;
Fig. 1c illustrates the lateral view of the spiral of the spacer, fixed into building structure,
Fig. 1d section B-B from Fig. 1c, where the inner end of the coil of the spiral, terminated with a comb, is situated in the vertical plane of the vertical section.

The submitted invention of the anchor for thermally insulating building systems is described in more details on the exemplary designs and on the enclosed schematic drawings, which represent the following:
Fig. 2 axonometric view of a part of a single space spiral of the anchor,
Fig. 3a lateral view on the longitudinal axis of a double spiral of the anchor, fixed into the building structure, and
Fig. 3b section A1 - A1 from Fig. 3a, with the inner reinforcement in the shape of reverse letter "S" with vertical orientation,
Fig. 3c lateral view of longitudinal axis of a double spiral of the anchor, fixed into building structure, and
Fig. 3d section B1 - B1 from Fig. 3c, with the inner reinforcement in the shape of reverse letter "S" with vertical orientation,
Fig. 4 axonometric view of a part of a double spiral of the anchor, with the inner reinforcement in the shape of a reverse rounded "S",
Fig. 5 axonometric view of a part of a double spiral of the anchor, with the inner reinforcement in the shape of reverse letter "S", with sharp edges,
Fig. 6 vertical section on the longitudinal axis of the spiral of the anchor, where the spiral has a shape close to the Archimedes spiral,
Fig. 7 top view of wired mesh, with warp and weft,
Fig. 8 top view of perforated semi-product,
Fig. 9a lateral view of the spiral of external cylindrical shape,
Fig. 9b sections AI-AI, AII-AII, AIII-AIII from Fig. 9a,
Fig. 10a lateral view of the spiral of external conical shape,
Fig. 10b sections BI-BI, BII-BII, Bill-Bill from Fig. 10a,
Fig. 11a axonometric view of external cylindrical spiral of the anchor, with schematic illustration of forces impacting the anchor without the filling mass, when stressed with respect to bending,
Fig. 11b section C-C from Fig. 11a, after deformation of the spiral by bending without the filling mass,
Fig. 12a axonometric view of single spatial spiral of the anchor,
Fig. 12b vertical section from Fig. 12a in any place of the longitudinal axis of this spiral,
Fig. 13 vertical section on the application of the anchor in contact thermally insulating system,
Fig. 14 vertical section on the application of the anchor in contactless thermally insulating system,
Fig.15 the application of the anchor in contact thermally insulating system, in the place of absence of the glue between the building structure and the original building insulation, and
Fig. 16 the application of the anchor in contact thermally insulating system, in the place of occurrence of the glue between the building structure and the original building insulation.

### Examples of Designs of the Invention

### Example 1

### (Fig. 1A, 1B, 1a, 1b, 1c, 1d)

The nearest state of the art pursuant to the application of the invention CZ PV 2010-300.

The current solution of the spiral spacer 100 pursuant to CZ PV 2010-300 is illustrated in Fig. 1A, 1B, 1a, 1b, 1c, 1d. Fig. 1A illustrates in perspective view the application of non-illustrated foamed mass into the spacer 100. Fig. 1B illustrates longitudinal vertical section through the application, with the spacer 100 inserted into the building structure 800.

Fig. 1A, 1B illustrate the application of foamed expansion filling mass into the spiral spacer 100, made of wired mesh or, as the case may be, perforated metal sheet, the spiral of which 200 is made of the coil 400, overlapping the first coil 400 on the external surface of the spacer 100. The inner end of the coil 400 is terminated with an inner comb 110 oriented in the direction of the longitudinal axis 500. The filling mass is applied into the inner space of the spiral 200 with the application hose 160. When sliding in the application hose 160, in the direction indicated by the arrow of the bottom of the anchoring hole, through the inner space of the spiral 200, a relatively big risk of a collision of the face of the application hose 160 with the burr or overlapping wires from the mesh or sharp edges of the perforated metal sheet is created, and in this case the application hose can get seized and it is not inserted any further. The operator can assume that the end of the application hose 160 has been already inserted up to the bottom of the anchoring hole and starts the foaming. Therewith a serious danger is created that the expansion material does not fill the anchoring hole in the whole inserted length of the anchor. Therefore, it can result in considerable decrease of the anchoring strength. In a simple way, it is possible to ensure the inspection of depth of inserting the application hose 160, e.g. by inserting a steel pin before foaming; however it represents another task and, therefore, time loss.

Fig. 1a illustrates the lateral view of the spiral 200 of the spacer 100, fixed into the building structure 800. Fig. 1b illustrates the vertical section A-A through the spacer 100 from Fig. 1a, the inner end of which of the coil 400 of the spiral 200 is terminated with a comb 110 that is situated in the horizontal axis of the vertical section of the spiral 200.

Fig. 1a also illustrates strength F₀₁ operating on the free end of the spiral 200, which stresses it in terms of bending. The cross-section module W₀₁ in the bend is a quantity, which characterizes the cross-section of the spacer 100 and its position or respectively the position of the comb 110 with respect to the impacting force F_{01 min}. In this case, the cross-section module W_{01 min} enables to stress the spacer 100 with force F_{01 min}, which means that it is the most disadvantageous orientation of the comb 110 with respect to the direction of the stressed strength F_{O1} in bending. In this position of the comb 110 the spacer 100 can transfer the smallest strength F₀₁, which stresses such oriented spacer in bending.

Fig. 1c illustrates the lateral view of the spiral 200 of the spacer 100, fixed into the building structure 800. Fig. 1d illustrates the vertical section B-B of the spacer 100 from Fig. 1c, where the inner end of the coil 400 of the spiral 200 is terminated with a comb 110 that is situated in the vertical axis of the vertical section of the spiral 200.

Fig. 1c illustrates strength F₀₂ impacting the free end of the spiral 200, which stresses it in bending. The cross-section module W₀₂ in the bend is a quantity, which characterizes the cross-section of the spacer 100 and its position or respectively the position of the comb 110 with respect to the impacting force F_{02 max}. In this case, the cross-section module W_{02 max} enables to stress the spacer 100 with force F_{01 max} in bend. In this position of the comb 110, the same spacer 100 can transfer the biggest force F_{02 max}, which stresses such oriented spacer in bending.

The difference of strengths, which stress the spacer 100 in bend, and by which we can stress the spacer 100 in the most advantageous position of the comb 110 pursuant to Fig. 1d, and in the most disadvantageous position pursuant to Fig. 1b, is substantial. It is also evidenced by the ratio of forces F_{O1min} and F_{02 max} and also the ratio of cross-section modules W₀₁ₘᵢₙ and W_{02 max}.

The result is that with respect to this spacer 100, turning of its comb 110 towards the impacting forces F₀₁ in bend has a major impact.

All other exemplary specific designs concern the submitted invention.

### Example 2

### (Fig. 2)

Fig. 2 provides a perspective view of a part of single anchor 1a with two coils 4 in spatial arrangement, where the inner coil 4 is not terminated with any inner reinforcement. The external biggest diameter of the coil 4 of the spiral 2 is 30 mm and the smallest diameter is 4 mm.

In case of this arrangement of coils 4 of the spiral 2 of the single anchor 1a, the non-illustrated expansion filling mass 9 has good penetration inside, outside and between the coils 4 of this single anchor 1a. The coils 4 are wound up nearly equidistantly. The distance between the individual separated coils 4 of the spatially coiled spiral 2 equals, in case of the outer diameter of the spiral 2 over 20 mm, to 1.5-to 2-fold of the average size of the eye, hole or perforation of the material 3. In case of this arrangement of the single anchor 1a, it is possible to use the application hose 16 with relatively big application cross-section, of course smaller than the inner diameter of this anchor 1a. The single anchor 1a has good strength when it is subjected to shear and bend.

From such arranged spiral 2 and the filling mass 9 penetrating inside and outside through this spiral 2, between its coils 4 and through its eyes, holes or perforations of the material 3, the anchor 1a is made as a self-supporting structural element for anchoring holes in thermally insulating building systems.

### Example 3

### (Fig. 3a, 3b, 3c, 3d)

The anchor 1b, designed for thermally insulating building systems, in the specific exemplary design pursuant to this invention, without the illustrated filling mass 9, is illustrated in Fig. 3a, 3b, 3c, 3d.

The anchor 1b is made as a self-supporting structural element. The anchor 1b does not need any other reinforcement compact means, which cause undesired thermal bridges and increase weight of the anchoring structure. The beginning and the end of the coil 4 are without any part or surface, which would by directed in any other direction from the continuous lead of the spiral 2 in the direction of its longitudinal axis 5 or from it, which greatly simplifies the production.

Fig. 3a illustrates the lateral view of the spiral 2 of the anchor 1, fixed into the building structure 8.

Fig. 3b illustrates the vertical section A1-A1 of the anchor 1b from Fig. 3a. The anchor 1b has the middle part of the coil 4 passing across the inner cross-section of the spiral 2, 2a, 2b, 2c, 2d, 2e. Therewith an inner transverse reinforcement (11, 11b, 11c) is created from this part of the coil 4 as an integral part of the coil 4. The reinforcement 11b in the shape of reverse letter "S" is oriented in the vertical axis 7 from Fig. 3a.

Fig. 3a illustrates strength F₀₁ impacting the free end of the spiral 2, which stresses it in bend. The cross-section module W₀₁ in bend is a quantity, which characterizes the cross-section of the anchor 1 and its positions respectively the positions of the inner transverse reinforcement 11b with respect to the impacting force F_{01 max}. The cross-section module W_{01 max} does not enable, in this case, to stress the anchor 1 with force F_{01 max}, which means that it is the most advantageous orientation of the inner transverse reinforcement 11b with respect to the direction of the impacting strength F_{O1} in bend. In this position of the inner transverse reinforcement 11b the anchor 1b can transfer the biggest force F_{01 max}, which stresses such oriented anchor 1 in bend.

Fig. 3c illustrates the lateral view of the spiral 2 of the anchor 1, fixed into the building structure 8.

Fig. 3d illustrates the vertical section B1-B1 through the anchor 1 from Fig. 3c. The reinforcement 11b in the shape of reverse letter "S" is oriented in a horizontal axis 5 of the anchor 1.

Fig. 3c illustrates the force impacting the free end of the spiral 2, which stresses it in bend. The cross-section module W₀₂ in bend is a quantity, which characterizes cross-section of the anchor 1 and its positions respectively the positions of the reinforcement 11b with respect to the impacting force F_{02 min}. In this case the cross-section module W_{02 min} enables to stress the anchor 1 with force F₀₁ₘᵢₙ in bend. In this position of the inner transverse reinforcement 11b, the same anchor 1b can transfer the smallest force F_{02 min}, which stresses the same anchor 1 in bend.

The difference of forces, which impact the anchor 1 in bend, and the force, by which we may stress the anchor 1 in the least favourable position of the inner transverse reinforcement 11b pursuant to Fig. 3d, and in the most advantageous position pursuant to Fig. 3b, is negligible with respect to the application of the anchor 1. It is also evidenced by the ratio of forces F_{O1min} and F_{02 max} and also the ratio of cross-section modules W₀₁ₘᵢₙ and W_{02 max}.

The result is that with respect to this anchor 1, there is no major difference in rotating its inner transverse reinforcement 11b towards the impacting forces F₀₁, F₀₂ in bend.

### Example 4

### (Fig. 4)

An alternative design of the double anchor 1b is illustrated in Fig. 4 in a partial axonometric view, with rounded inner reinforcement 11b. The inner reinforcement 11b has a shape of reverse rounded "S" and creates in the exemplary design two inner channels with nearly identical mirror symmetry arrangement. Into each of the said channels non-illustrated expansion filling mass 9 is applied through the application hose 16 or, as the case may be, simultaneously into both said channels with the double application hose 16. Both channels have the shape, which does not create any risk of a collision, in any case, when inserting the application hose 16 with sharp edges or wires 3 of the mesh 3a or perforated metal sheet 3b. When pulling out the application hose 16 and concurrent foaming of the filling mass 9, no mechanical damage or cutting of the application hose 16, which is usually made of flexible plastic material, occurs. An advantage of this double anchor 1b is that a discretionary orientation of the rounded inner reinforcement 11b towards the vertical axis 7 has no major impact on the size of force, which can be born by this double anchor 1b.

### Example 5

### (Fig. 5)

Another alternative design of a double anchor 1c is illustrated in a partial axonometric view in Fig. 5. It concerns a double anchor 1c with a sharp inner reinforcement 11c in the shape of a reverse letter "S", with sharp edges and with a smaller radius of rounding. In the exemplary design, the shape of the inner reinforcement 11c is, in its big part, straightforward, nearly in the shape of a straight line. The inner space of this alternative double anchor 1c is divided into two nearly identical channels, into which the application hoses 16 are inserted or the application hose 16 with double ends. The position of the sharp inner reinforcement 11c of the alternative double anchor 1c towards the vertical axis 7 has bigger influence on the load-bearing capacity of the anchor 1c. This design of the double anchor 1c is simpler to produce than the design of the double anchor 1b identified in the previous example of design.

### Example 6

### (Fig. 6)

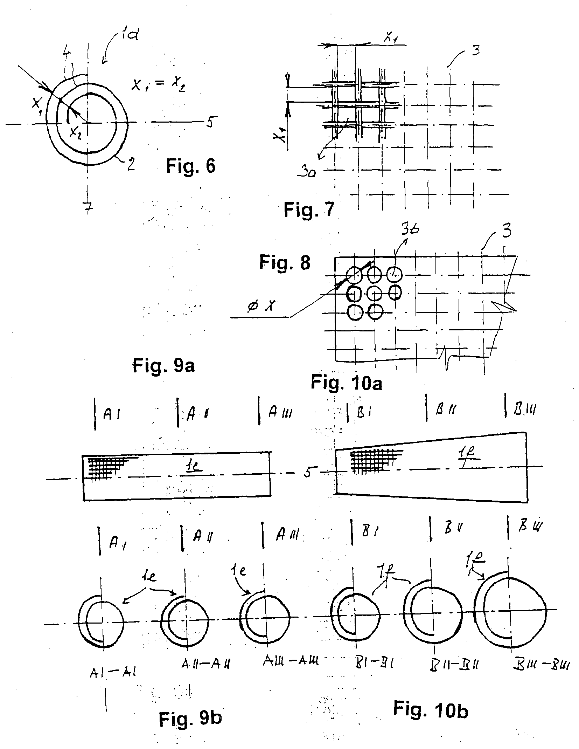

Another alternative anchor 1d in the shape of the Archimedes spiral 2c is illustrated in Fig. 6 in the vertical section on its longitudinal axis 5. It concerns the most frequently used shape of the spiral 2, which respects the condition of the required distances of individual layers of the spiral 2 between coils 4. It concerns a nearly ideal mathematical spiral, where the distance between individual layers of coils 4 is constant. This alternative spiral 1d has not the inner end of the coil 4 situated in the longitudinal axis 5 of the anchor 1d, but the inner end of the coil 4 is situated in such a distance from the longitudinal axis 5 to enable the realization of the application of the non-illustrated filling mass 9 into the inner space of this type of the anchor 1d. The distance between individual separated coils 4, marked x₁, x₂, is nearly the same as the dimension x₁ of eyes of the used mesh as in the following Fig.7 or the hole in the metal sheet with perforations with diameter x in Fig. 8. The distance x₁, x₂ between individual separated coils 4 of spatially coiled spiral 2 equals, in case of the outer diameter of the spirals 2 up to 20 mm, the average size of the eye/hole or perforation of the material 3a, 3b.

### Example 7

### (Fig. 7)

The anchor 1 is made by coiling from flat surface material 3, e.g. from metal mesh 3a with warp and weft, as it is illustrated in Fig. 7 in top view of this mesh 3a. The mesh 3a can have treated surface, e.g. galvanic or otherwise. The mesh 3a can be made of stainless material.

### Example 8

### (Fig. 8)

Fig. 8 illustrates another surface material 3, namely in top view of the metal flat semi-product 3a with various type of perforations. This material can have surface treatment or, as the case may be, it can have anti-corrosion properties.

### Example 9

### (Fig. 9a, 9b)

Fig. 9a illustrates the lateral view of the cylindrical anchor 1e of external cylindrical shape, which is the most usual type of the spiral 2. Technologically, this type of the anchor 1e is not demanding with respect to production, has a wide variety of options of application, without necessity to differentiate the orientation of ends of the anchor 1e when inserting into the anchoring hole.

Fig. 9b illustrates the vertical sections from Fig. 9a, namely the sections AI-AI, AII-AII, AIII-AIII from Fig. 9a. On the basis of these sections it is evident that the vertical sections on the longitudinal axis 5 of the cylindrical anchor 1e in any place are identical.

### Example 10

### (Fig. 10a, 10b)

Fig. 10a illustrates the lateral view of alternative conical anchor 1f of external conical shape. Fig. 10b illustrates sections B1-B1, B2-B2, B3-B3 from Fig. 10a, on the basis of which it is obvious that external surface of the conical anchor 1f is increased continually. This anchor 1f shall be inserted into the anchoring hole by its end that has smaller diameter. The advantage of this type of the anchor 1f is that the anchoring forces holding the anchor 1f in the building structure 8 are primarily bigger than forces connecting the anchor 1f with the building insulation 12. Conical shape of the anchor 1f inserted into the building insulation 12 increases the strength, which needs to be applied to tear off this insulation 12 from the building structure 8.

### Example 11

### (Fig. 11)

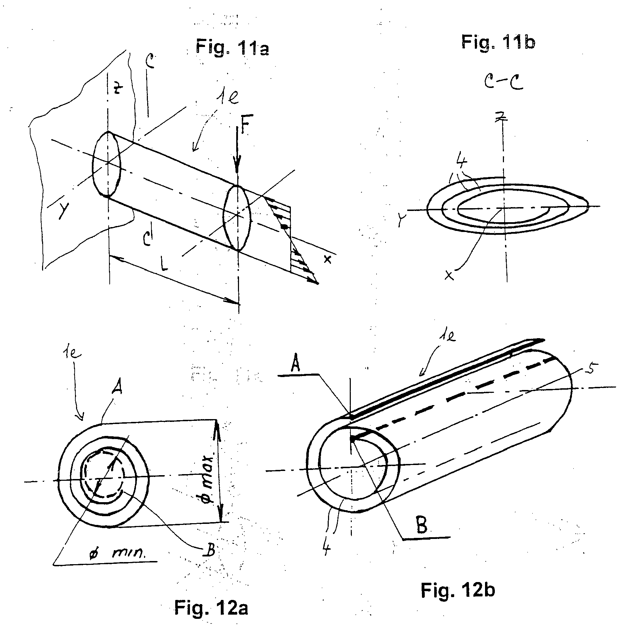

Fig. 11a illustrates the axonometric view of external cylindrical anchor 1e, with schematic illustration of forces impacting the anchor 1e, of length L, without the filling mass 9, in case of stress in bend in the direction of axes x, y, z, namely with the stress force F in bend. The illustration in the right part of Fig. 11a shows clearly that the biggest stress is transferred by fibres that are most distant from the neutral axis x.

Fig. 11b illustrates this originally cylindrical anchor 2e in section C-C from Fig. 11a, after deformation of the spiral 2e by bending, without the filling mass. On the basis of this illustration it is obvious that by the impact of the force in bend, the unfilled spiral 2e has the tendency to be deformed to an ellipsoid shape. This figure also shows clearly that theoretically the longitudinal fibres of the material 3 in the most loaded areas got closer to the axis x. Therewith the resistance of the original anchor 2e was rapidly decreased by the impact of the stress forces F in bend.

This specified example of design of the load of the spiral cylindrical anchor 1e without the filling mass illustrates the example what can happen if the cylindrical anchor 1e is not filled and, therefore, it does not actually resist the layers of the spiral in getting closer to the neutral axis x and, thereby, be deformed.

If the cylindrical anchor 1e, being inserted into the anchoring space, is filled with the expansion foaming mass, this mass prevents the individual layers of the coils 4 of the spiral 2 to get closer to each other and, at the same time, mutually to the neutral axis x. The foaming mass 9 generates such resistance that can held the original distance of the coils 4 subjected to considerably bigger force than the spiral 2 not filled with foam. The deformation of the anchor 1e filled with foam takes places much later and after impact of much bigger stress force F.

### Example 12

### (Fig. 12)

Fig. 12a axonometric view of single spatial spiral 2 of the cylindrical anchor 1e. External direct line ending of the spiral 2 is marked with letter A; inner ending of the spiral 2 is marked with letter B.

Fig. 12b illustrates the vertical section from Fig. 12a in any place of longitudinal axis 5 of this spiral 2, where letter A marks the external end point of the spiral 2, and letter B marks the inner end point B of this spiral 2 in vertical section.

The anchor 1e has outer diameter Φₘₐₓ (Fig. 12b) and inner diameter Φ_{mi*n*}. For thermally insulating systems, long-term experiments identified the range of this maximum diameter Φₘₐₓ to be up to 30 mm, and minimum diameter Φₘᵢₙ over 4 mm.

### Example 13

### (Fig. 13)

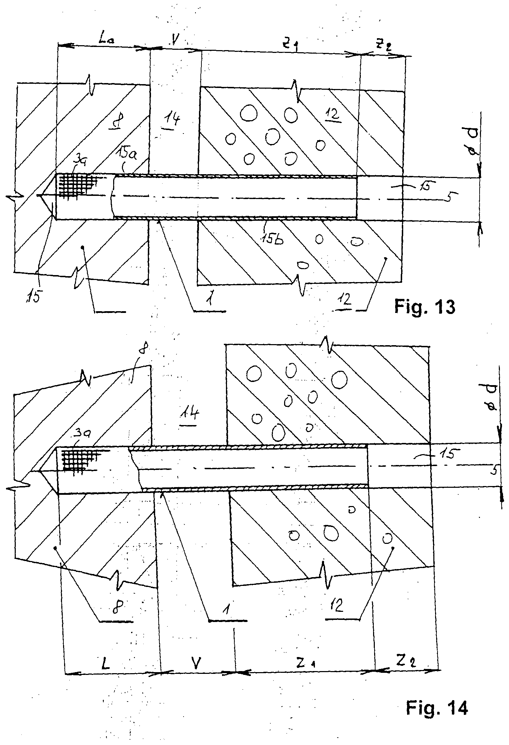

Exemplary specific application of the anchor 1 in contact thermally insulating system is described hereinbelow and is displayed in Fig. 13, illustrating a partial vertical section on the longitudinal axis 5 of the anchoring connection. This application is also designed for additional anchoring of the contact thermally insulating system subjected to its insufficient cohesion with the building structure.

The contact thermally insulating system includes the building structure 8 and building insulation 12, between which an air gap 14 is closed. In the building structure 8, an anchoring hole 15a was drilled, the length Lₐ of which corresponds to 2- to 10-fold, advantageously 3- to 6-fold, of the external diameter d of the anchor 1 while respecting the conditions and thickness of the building structure 8. When complying with such inserting of the anchor 1 into the building structure 8 and assessing the conditions and the thickness of the building structure 8 and also the weight of the anchored or additionally anchored building 12 in an expert way, the anchoring in the building structure 8 is safe. Due to inadequate assessment of the conditions of the building structure 8 and incorrect assessment of weight of the building insulation 12, the anchoring ability of the system could be reduced.

Long-term experiments demonstrated that the optimum minimum length Z1 of inserting the anchor 1 into the anchoring hole 15b in the building insulation 12 shall be at least to the depth of 2/3 of the building insulation 12, however not less than 50 mm, e.g. with the polystyrene building insulation 12 with the specific weight required by the applicable European standards for the contact thermal insulation. If inserting of the anchor 1 into the building insulation 12 is not complied with, it can result in a decrease of the required hold-down forces specified by the applicable standard.

The depth of sinking Z2 the anchor 1 in the building insulation 12 is specified on the basis of realized experiments to be at least 5 mm, which prevents from the creation of the thermal bridge of the anchor 1.

Between the building structure 8 and the building insulation 12 there is distance V, which is established by the applicable standards for contact thermally insulating systems. This space between the building structure 8 and the building insulation 12 is partially filled with glue or closed air gaps 14. In case of a realization of a new contact thermally insulating system, the distance V is created pursuant to the applicable standards. In case of reconstructions or renovations of the contact thermally insulating systems, the already given distance V is respected.

### Example 14

### (Fig. 14)

Fig. 14 illustrates the vertical section of the application of the anchor 1 in a contactless thermally insulating system. The contactless thermally insulating system includes similar building elements and relations between them as in the previous exemplary design, with the difference that the distance V between the building structure 8 and the building insulation 12 is designed with respect to other facts than the applicable standards for contact thermally insulating systems.

The space between the building structure 8 and the building insulation 12 does not include any additional glue, only non-illustrated gluing targets, which were created in the vicinity of the anchors 1 with the expanding filling mass 9 (non-illustrated).

### Example 15

### (Fig. 15)

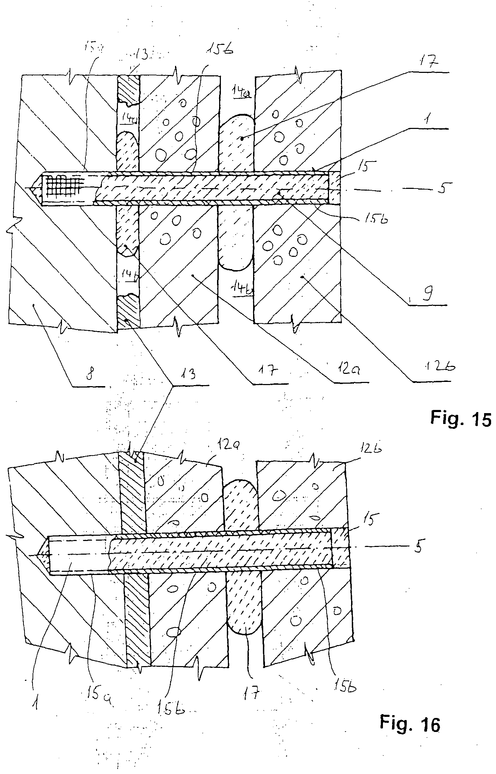

Fig.15 illustrates another application of the anchor 1 in contact thermally insulating system including the building structure 8 and the original thermal building insulation 12a and a new thermal building insulation 12b is situated behind it. This situation occurs in case of a loss of cohesion of the original thermally insulating system from any reason. It is possible to take advantage of the fact that it is necessary to restore the cohesion and holding force with the use of additional anchoring and, at the same time, realize additional thermal insulation of the object pursuant to the current requirements and recommendations. On the original contact thermally insulating system, the anchoring of the new insulating system is realized and, at the same time, the connection of the original contact thermal insulation with the building structure 8 is restored.

In this specific exemplary design, an example is described and illustrated in Fig. 15, when, during the additional anchoring, the anchoring hole 15a was drilled into the building structure 8 and through both building insulations 12a, 12 b with the anchoring hole 15b. In the area between the building structure 8 and the building insulation 12a there is the air gap 14a and between both building insulations 12b there is the air gap 14b. In air gaps 14a, 14b a circular target 17 is formed of the foamed mass 9 in the surroundings of the anchor 1, which increases the holding force created already in the anchor 1 itself during the expansion of the foamed mass 9 in the anchoring hole 15a into the building structure 8 and in the anchoring holes 15b of the original building insulation 12a. The new layer of the thermally insulating system is anchored with the actual anchor 1 and gluing targets 17 from the foamed mass 9, which were formed in its surroundings.

The said solution enables efficient application of the items for renovations of the contact thermally insulating systems and, at the same time, in this case, it improves the thermal insulation of the building, while concurrently restoring the cohesion of the original building insulation 12a with the building structure 8.

### Example 16

### (Fig. 16)

Fig. 16 illustrates another possible application of the anchor 1 in contact thermally insulating system, in fact identical with the previous exemplary design, with the difference that the anchoring hole 15a was drilled in the place of presence of the glue 13 between the building structure 8 and the original building insulation 12a.

In this case, it also restores the cohesion of the original thermally insulating system with the building structure 8. The anchor 1 ensures reliable anchoring of the thermally insulating systems.

The aforesaid exemplary designs of the anchor 1 for thermally insulating building systems cannot be explained in a limited way only pursuant to these specifically provided examples. In the sense and range of the patent claims it is possible to create an unlimited quantity of anchors 1 for thermally insulating building systems pursuant to this invention.

### Industrial Applicability

The anchor for thermally insulating building systems is used for anchoring of contact and contactless, internal or external thermally insulating systems, also for ceiling insulating systems, for the connection of the building insulation 12 with the building structure 8, advantageously for the building insulating composite.

### Related marks

100 spacer
200 spiral
400 coil
500 longitudinal axis
700 vertical axis 700
160 application hose
800 building structure
110 comb
140 air gap
1 anchor
1a single anchor
1b double anchor 1b with rounded "S"
1c double anchor 1c with sharp "S"
1d anchor 1d with Archimedes spiral
1e cylindrical anchor 1e
1f conical anchor 1f
2 spiral
3 material
3a mesh
3b perforated board
4 coil
5 longitudinal axis
7 vertical axis
8 building structure
9 expansion filling mass
11 reinforcement
11b reinforcement 11b rounded
11c reinforcement 11c sharp
12 building insulation
12a original building insulation
12 b new building insulation
13 glue
14 air gap
14a air gap 14a between building structure 8 and building insulation 12a
14b air gap 14 between building insulations 12a, 12b
15 anchoring hole
15a anchoring hole 15a in building structure 8
15b anchoring hole 15b in building insulation 12
16 application hose
17 gluing target
W₀₁, W_{01 max} W_{02 max} W_{02 min,,} W_{02 min _}cross-section module in bend
F₀₁, F₀₂, F_{01 min}, F_{01 max_}F_{02 min}, F_{02 max} strength in bend
L length of anchor
x, y, z axes
F stress strength in bend
A external termination of spiral
B inner termination of spiral
ₘₐₓ outer diameter of anchor 1e
Φₘᵢ*ₙ.* inner diameter of anchor 1e
Lₐ length of anchoring hole 15a
Z1 minimum length of inserting the anchor
V distance between building structure and building insulation
v₁, v₂ distance between neighbouring wires of mesh 3a
Φ diameter Φ of hole of perforated board 3b
x₁, x₂ distance between individual coils 4
d - diameter of anchoring hole

## Claims

1. Anchor for thermally insulating building systems, which is in fact tubular and elongated in the direction of its longitudinal axis (5) and is made of surface primarily flat metal material (3, 3a, 3b) or, as the case may be, another material with corresponding strength, with eyes, holes or perforations all over its surface, enabling permanent deformation, and coiled up to at least one spatially arranged spiral (2, 2a, 2b, 2c, 2d, 2e) with at least one overlapping coil (4), with the start of the coil (4) parallel to the longitudinal axis (5), and with the end of the coil (4) or the last coil (4) situated primarily on the external jacket, or creating partially or completely the external jacket of the anchor, when the coils (4) being spatially arranged in the direction vertical to the longitudinal axis (5) without contact of individual layers of the coil (4) and featuring the ability of penetration by the filling mass (9) between coils (4), outside and inside of their spirals (2, 2a, 2b, 2c, 2d, 2e) and between their eyes, holes or perforations, after anchoring in the anchoring hole (15, 15a, 15b), wherein
- beginning and end of the coil (4) of the spatially coiled spiral (2, 2a, 2b, 2c, 2d, 2e) is without any part or surface, which would be deflected in any other direction from the continuous lead of the spiral (2, 2a, 2b, 2c, 2d, 2e) and
- the anchor (1, 1a, 1b, 1c, 1d, 1e, 1f) is made as a self-supporting structural element without other inserted compact reinforcement items.

2. The anchor pursuant to the claim 1, **characterized in that**
the anchor (1, 1a, 1b, 1c, 1d, 1e, 1f) features
- the outer biggest diameter of the coil (4) of the spiral (2, 2a, 2b, 2c, 2d, 2e) 30 mm and the smallest diameter is 4 mm, when
- the distance between individual separated coils (4) of the spatially coiled spiral (2, 2a, 2b, 2c, 2d, 2e) equals, in case of the outer diameter of the spirals (2, 2a, 2b, 2c, 2d, 2e) up to 20 mm, the average size of the eye, hole or perforation of the material (3, 3a, 3b), and
- the distance between individual separated coils (4) of the spatially coiled spiral (2, 2a, 2b, 2c, 2d, 2e) equals, in case of the outer diameter of the spirals (2, 2a, 2b, 2c, 2d, 2e) over 20 mm, 1.5- to 2-fold of the average size of the eye, hole or perforation of the material (3, 3a, 3b).

3. The anchor pursuant to the claim 1, **characterized in that** it has the middle part of the coil (4) coiled across the inner cross-section of the spiral (2, 2a, 2b, 2c, 2d, 2e), which creates the inner transverse reinforcement (11, 11b, 11c) from this part of the coil (4) as an integral continuous part of the coil.

4. The anchor pursuant to the claim 3, **characterized in that** the inner transverse reinforcement (11, 11b, 11c) passes through the longitudinal axis (5) of the spiral (2, 2a, 2b, 2c, 2d, 2e).

5. The anchor pursuant to the claim 3, **characterized in that** the inner transverse reinforcement (11b) features in the transverse section, vertical to the longitudinal axis (5), a reverse shape of letter "S" with rounded transitions to the follow-up coils (4) of the spiral (2, 2a, 2b, 2c, 2d, 2e).

6. The anchor pursuant to the claim 3, **characterized in that** the inner transverse reinforcement (11c) features in the transverse section a reverse shape of letter "S" with sharp transition to the follow-up coils (4) of the spiral (2, 2a, 2b, 2c, 2d, 2e) .

7. Method of anchoring of the anchor for thermally insulating building systems pursuant to the claim 1 to 6 **characterized in that** the anchor (1, 1a, 1b, 1c, 1d, 1e, 1f) and the filling mass (9), penetrating outside and inside the spiral (2, 2a, 2b, 2c, 2d, 2e) of the anchor, between coils (4) and through the eyes, holes or perforations of the material (3, 3a, 3b) of the anchor, create a self-supporting structural element, which fills the anchoring hole (15, 15a, 15b) in thermally insulating building systems.

8. The method of anchoring pursuant to the claim 7, **characterized in that** the depth (Lₐ) of inserting the anchor (1, 1a, 1b, 1c, 1d, 1e, 1f) into the anchoring hole (15, 15a, 15b) in the building structure (8) corresponds to maximum 2- to 10-fold of the diameter of the anchor (1, 1a, 1b, 1c, 1d, 1e, 1f), however maximum to 150 mm.

9. The method of anchoring pursuant to the claim 7, **characterized in that** the depth (Lₐ) of inserting the anchor (1, 1a, 1b, 1c, 1d, 1e, 1f) into the anchoring hole (15, 15a, 15b) in the building insulation (12, 12a, 12b) reaches the maximum depth of 2/3 of the building insulation (12, 12a, 12b), however to the maximum depth of 50 mm of the building insulation (12, 12a, 12b).

## Patentansprüche

1. Der Anker für Bausysteme der Gebäudedämmung ist im Wesentlichen röhrenförmig und in der Richtung seiner Längsachse (5) durchgezogen und ist aus flachem, überwiegend glattem Metallmaterial (3, 3a, 3b) oder gegebenenfalls anderem Material mit entsprechender Festigkeit gefertigt, das mit Maschen, Öffnungen oder Perforierungen auf der gesamten Oberfläche versehen ist, die eine dauerhafte Deformierung ermöglichen, und das in mindestens eine räumlich angeordnete Spirale gewickelt (2, 2a, 2b, 2c, 2d, 2e) mit mindestens eine überstehende Windung (4) ist, mit einem Beginn der Windung (4) parallel zur Längsachse (5), und mit einem Ende der Windung (4) oder der letzten Windung (4), die sich überwiegend auf dem äußeren Mantel befindet oder die teilweise oder vollständig den äußeren Mantel des Ankers bildet, wobei die Windungen (4) räumlich senkrecht zur Längsachse (5) ohne Berührung der einzelnen Windungsschichten (4) angeordnet sind und die Fähigkeit haben, von dem Füllstoff (9) zwischen den Windungen (4), außerhalb und innerhalb ihrer Spiralen (2, 2a, 2b, 2c, 2d, 2e) und zwischen den Maschen, Öffnungen oder Perforierungen nach der Verankerung in der Ankeröffnung (15, 15a, 15b) ausgefüllt zu werden, wobei
- der Anfang und das Ende der Windung (4) der räumlich gewundenen Spirale (2, 2a, 2b, 2c, 2d, 2e) ohne jegliche Teile oder Flächen ist, die in irgendeiner anderen Richtung von der stetigen Führung der Spirale (2, 2a, 2b, 2c, 2d, 2e) abweichen würden und
- der Anker (1, 1a, 1b, 1c, 1d, 1e, 1f) als selbsttragendes Konstruktionselement ohne weitere einfügten kompakten Bewehrungsmittel geformt ist.

2. Der Anker gemäß Anspruch 1, **ist dadurch gekennzeichnet, dass**
der Anker (1, 1a, 1b, 1c, 1d, 1e, 1f)
- einen äußeren größten Durchmesser der Windung (4) der Spirale (2, 2a, 2b, 2c, 2d, 2e) von 30 mm und einen kleinsten Durchmesser von 4 mm hat, wobei
- die Entfernung zwischen den einzelnen getrennten Windungen (4) der räumlich gewundenen Spirale (2, 2a, 2b, 2c, 2d, 2e) bei einem äußeren Durchmesser der Spiralen (2, 2a, 2b, 2c, 2d, 2e) bis 20 mm gleich der Durchschnittsgröße der Maschen, Öffnungen oder Perforierungen des Materials (3, 3a, 3b) ist, und
- die Entfernung zwischen den einzelnen getrennten Windungen (4) der räumlich gewundenen Spirale (2, 2a, 2b, 2c, 2d, 2e) bei einem äußeren Durchmesser der Spiralen (2, 2a, 2b, 2c, 2d, 2e) über 20 mm gleich dem 1,5 bis 2-fachen der Durchschnittsgröße der Maschen, Öffnungen oder Perforierungen des Materials (3, 3a, 3b) ist,

3. Der Anker gemäß Anspruch 1 **ist dadurch gekennzeichnet, dass** der Mittelteil der Windung (4) quer zu dem inneren Querschnitt der Spirale (2, 2a, 2b, 2c, 2d, 2e) gewunden ist, wobei aus diesem Teil der Windung (4) eine innere Querbewährung (11, 11b, 11c) als integraler stetiger Teil der Windung gebildet wird.

4. Der Anker gemäß Anspruch 3 **ist dadurch gekennzeichnet, dass** die innere Querbewährung (11, 11b, 11c) durch die Längsachse (5) der Spirale (2, 2a, 2b, 2c, 2d, 2e) geht.

5. Der Anker gemäß Anspruch 3 **ist dadurch gekennzeichnet, dass** die innere Querbewährung (11b) im Querschnitt, senkrecht zur Querachse (5), die umgekehrte Form des Buchstaben "S" mit abgerundeten Übergängen in die anschließenden Windungen (4) der Spirale (2, 2a, 2b, 2c, 2d, 2e) bildet.

6. Der Anker gemäß Anspruch 3 **ist dadurch gekennzeichnet, dass** die innere Querbewährung (11c) im Querschnitt die umgekehrte Form des Buchstaben "S" mit scharfen Übergängen in die anschließenden Windungen (4) der Spirale (2, 2a, 2b, 2c, 2d, 2e) bildet.

7. Das Verfahren der Verankerung des Anker für Bausysteme der Gebäudedämmung gemäß Anspruch 1 bis 6 **ist dadurch gekennzeichnet, dass**
der Anker (1, 1a, 1b, 1c, 1d, 1e, 1f) und die Füllmasse (9), die außerhalb und innerhalb der Spirale (2, 2a, 2b, 2c, 2d, 2e) des Ankers, zwischen die Windungen (4) und durch die Maschen, Öffnungen oder Perforierungen des Materials (3, 3a, 3b) des Ankers eindringt, ein selbsttragendes Konstruktionselement bilden, das die Ankeröffnung (15, 15a, 15b) in Bausysteme der Gebäudedämmung ausfüllt.

8. Das Verfahren der Verankerung gemäß Anspruch 7 **ist dadurch gekennzeichnet, dass** die Tiefe (Lₐ) der Einführung des Ankers (1, 1a, 1b, 1c, 1d, 1e, 1f) in die Ankeröffnung (15, 15a, 15b) in der Baukonstruktion (8) maximal dem 2 - 10-fachen des Durchmessers des Ankers (1, 1a, 1b, 1c, 1d, 1e, 1f) entspricht, jedoch maximal bis 150 mm.

9. Das Verfahren der Verankerung gemäß Anspruch 7 **ist dadurch gekennzeichnet, dass** die Tiefe (Lₐ) der Einführung des Ankers (1, 1a, 1b, 1c, 1d, 1e, 1f) in die Ankeröffnung (15, 15a, 15b) in der Bauisolation (12, 12a, 12b) maximal 2/3 der Bauisolation (12, 12a, 12b) erreicht, jedoch maximal bis 50 mm der Tiefe der Bauisolation (12, 12a, 12b).

## Revendications

1. L'ancre pour systèmes de construction d'isolation thermique, est en substance tubulaire et allongée dans le sens de son axe longitudinal (5) et est fabriquée avec un matériau métallique superficiel principalement plat (3, 3a, 3b) ou, le cas échéant un autre matériau avec la résistance correspondante, avec oeillets, orifices ou perforations sur toute sa surface, permettant une déformation durable, et enroulée dans au moins une spirale (2, 2a, 2b, 2c, 2d, 2e) disposée spatialement avec au moins un filet (4) dépassant, avec le début du filet (4) parallèle à l'axe longitudinal (5), et avec l'extrémité du filet (4) ou le dernier filet (4) situé principalement sur l'enveloppe extérieure, ou créant partiellement ou complètement l'enveloppe extérieure de l'ancre, les filets (4) étant disposés spatialement dans un sens perpendiculaire à l'axe longitudinal (5) sans contact de chaque couche des filets (4) et faisant apparaître une capacité de passage de la matière de garniture (9) entre les filets (4), à l'extérieur et à l'intérieur de leurs spirales (2, 2a, 2b, 2c, 2d, 2e) et entre leurs oeillets ou perforations, après ancrage dans l'orifice d'ancrage (15, 15a, 15b), où
- le début et l'extrémité du filet (4) de la spirale enroulée spatialement (2, 2a, 2b, 2c, 2d, 2e) sont sans aucune partie ou surface s'écartant dans tout autre sens de la conduite continue de la spirale (2, 2a, 2b, 2c, 2d, 2e) et
- l'ancre (1, 1a, 1b, 1c, 1d, 1e, 1f) est créée en tant qu'élément de construction autoportant sans autres dispositifs compacts de renforcement insérés.

2. Ancre selon la revendication 1, **se caractérisant par le fait, que** l'ancre (1, 1a, 1b, 1c, 1d, 1e, 1f) fait apparaître
- un diamètre extérieur maximal du filet (4) de la spirale (2, 2a, 2b, 2c, 2d, 2e) de 30 mm et
le diamètre minimal étant de 4 mm,
- la distance entre chaque filet séparé (4) de la spirale enroulée spatialement (2, 2a, 2b, 2c, 2d, 2e) étant, avec un diamètre externe des spirales (2, 2a, 2b, 2c, 2d, 2e) n'excédant pas 20 mm, égale à la taille moyenne de l'oeillet, de l'orifice, de la perforation du matériau (3, 3a, 3b), et
- la distance entre chaque filet séparé (4) de la spirale enroulée spatialement (2, 2a, 2b, 2c, 2d, 2e) étant égale, avec un diamètre externe des spirales (2, 2a, 2b, 2c, 2d, 2e) de plus de 20 mm, à 1,5 à 2 fois la taille moyenne de l'oeillet, de l'orifice ou de la perforation du matériau (3, 3a, 3b),

3. Ancre selon la revendication 1, **se caractérisant par le fait, que** elle a une partie centrale de filet (4) enroulée à travers la section interne de la spirale (2, 2a, 2b, 2c, 2d, 2e), faisant de cette partie du filet (4) un blindage interne transversal (11, 11b, 11c) en tant que partie intégrale continue du filet.

4. Ancre selon la revendication 3, **se caractérisant par le fait, que** le blindage interne transversal (11, 11b, 11c) traverse l'axe longitudinal (5) de la spirale (2, 2a, 2b, 2c, 2d, 2e).

5. Ancre selon la revendication 3, **se caractérisant par le fait, que** le blindage interne transversal (11b) fait apparaître dans la section transversale, perpendiculaire à l'axe longitudinal (5), une forme renversée de la lettre « S » avec des passages arrondis dans les filets connexes (4) de la spirale (2, 2a, 2b, 2c, 2d, 2e).

6. Ancre selon la revendication 3, **se caractérisant par le fait, que** le blindage interne transversal (11c) fait apparaître dans la section transversale une forme renversée de la lettre « S » avec un passage pointu dans les filets connexes (4) de la spirale (2, 2a, 2b, 2c, 2d, 2e) .

7. Procédé d'ancrage de l'ancre pour les systèmes de construction d'isolation thermique, selon la revendication 1 à 6, **se caractérisant par le fait, que** l'ancre (1, 1a, 1b, 1c, 1d, 1e, 1f) et la matière de garniture (9), passant à l'extérieur et à l'intérieur de la spirale (2, 2a, 2b, 2c, 2d, 2e) de l'ancre, entre les filets (4) et à travers les oeillets, orifices ou perforations du matériau (3, 3a, 3b) de l'ancre, crée un élément de construction autoportant, remplissant l'orifice d'ancrage (15, 15a, 15b) dans les systèmes de construction d'isolation thermique.

8. Procédé d'ancrage selon la revendication 7, **se caractérisant par le fait, que** la profondeur (Lₐ) d'insertion de l'ancre (1, 1a, 1b, 1c, 1d, 1e, 1f) dans l'orifice d'ancrage (15, 15a, 15b) dans la structure de construction (8) correspond au maximum à 2 - 10 fois le diamètre de l'ancre (1, 1a, 1b, 1c, 1d, 1e, 1f), mais au maximum jusqu'à 150 mm.

9. Procédé d'ancrage selon la revendication 7, **se caractérisant par le fait, que** la profondeur (Lₐ) d'insertion de l'ancre (1, 1a, 1b, 1c, 1d, 1e, 1f) dans l'orifice d'ancrage (15, 15a, 15b) dans l'isolation de construction (12, 12a, 12b) touche au maximum jusqu'à une profondeur des 2/3 de l'isolation de construction (12, 12a, 12b), mais au maximum jusqu'à 50 mm de la profondeur de l'isolation de construction (12, 12a, 12b).
